# EUROPEAN PATENT APPLICATION

(11) **EP 4 549 021 A2**
(43) Date of publication of application: **07.05.2025**
(21) Application number: 24208128.9
(22) Date of filing: 22.10.2024
(51) Int. Cl.: B01L 7/00, G01N 35/00, B01L 9/06

(54) **HEAT TRANSFER DEVICE, HEATING DEVICE, AND PROCESSING DEVICE**

(30) Priority: 02.11.2023 JP 2023188681
(71) Applicant: Yokogawa Electric Corporation, Tokyo 180-8750 (JP)
(72) Inventor: UCHINO, Youichi, Musashino-shi, Tokyo, 180-8750 (JP); KUWATA, Masahiro, Musashino-shi, Tokyo, 180-8750 (JP)
(74) Representative: Stöckeler, Ferdinand

(57) **Abstract**

A heat transfer device that facilitates efficient heat transfer to and from enclosed portions of a container, a heating device, and a processing device are provided. The heat transfer device includes receptacles into and from which the enclosed portions of the container, which can enclose samples, are configured to be insertable and removable. The receptacles are configured to be able to transfer heat to and from the received enclosed portions. The receptacles are configured to be enlargeable and contractible, and to be biased in a contracting direction at least when enlarged.

## Description

### TECHNICAL FIELD

The present disclosure relates to a heat transfer device, a heating device, and a processing device.

### BACKGROUND

Heat transfer devices having receptacles into and from which enclosed portions of containers, which can enclose samples, are configured to be insertable and removable, and that are configured to be able to transfer heat to and from the received enclosed portions are known. See, for example, Patent Literature (PTL) 1.

### CITATION LIST

### Patent Literature

PTL 1: JP 2011-19537 A

### SUMMARY

It is desirable for heat transfer devices, as described above, to be able to transfer heat as efficiently as possible to and from enclosed portions of containers.

It would be helpful to provide a heat transfer device that facilitates efficient heat transfer to and from an enclosed portion of a container, a heating device, and a processing device.

One aspect of the present disclosure is as follows.
[1] A heat transfer device including a receptacle into and from which an enclosed portion of a container that can enclose a sample is configured to be insertable and removable, the receptacle configured to be able to transfer heat to and from the received enclosed portion,
   wherein the receptacle is configured to be enlargeable and contractible, and to be biased in a contracting direction at least when enlarged.
   Such a configuration facilitates efficient heat transfer, by reducing a gap between the receptacle and the enclosed portion.
[2] The heat transfer device according to [1], wherein the receptacle is constituted of a plurality of divided portions.
   Such a configuration further facilitates efficient heat transfer to and from the enclosed portion of the container.
[3] The heat transfer device according to [1] or [2], wherein the receptacle is configured to be enlargeable and contractible in a predetermined direction different from an insertion/removal direction of the enclosed portion.
   Such a configuration further facilitates efficient heat transfer to and from the enclosed portion of the container.
[4] The heat transfer device according to any one of [1] to [3], wherein
   the receptacle has a first portion configured to be able to receive a tapered tip of the enclosed portion and a second portion configured to be able to receive a portion of the enclosed portion other than the tip, and
   the second portion is configured to be enlargeable and contractible in a predetermined direction different from an insertion/removal direction of the enclosed portion, and to be biased in the contracting direction at least when enlarged.
   Such a configuration further facilitates efficient heat transfer to and from the enclosed portion of the container.
[5] The heat transfer device according to [4], wherein the first portion and the second portion are biased in a direction that brings the first portion and the second portion close to each other.
   Such a configuration further facilitates efficient heat transfer to and from the enclosed portion of the container.
[6] The heat transfer device according to [4] or [5], wherein the second portion is formed of a block pair that is guided, by a shaft, to be able to be apart from and close to each other in the predetermined direction.
   Such a configuration further facilitates efficient heat transfer to and from the enclosed portion of the container.
[7] The heat transfer device according to [6], wherein the block pair is biased, by a compression spring pair passed through the shaft, in a direction that brings the block pair close to each other in the predetermined direction, at least when enlarged.
   Such a configuration further facilitates efficient heat transfer to and from the enclosed portion of the container.
[8] A heating device including:
   the heat transfer device according to any one of [1] to [7]; and
   a heater configured to be able to heat the heat transfer device.
   Such a configuration facilitates efficient heat transfer to and from the enclosed portion of the container. Since the receptacle is enlargeable, it is possible to prevent the enclosed portion of the container, which is expanded by heating, from galling to the receptacle.
[9] A processing device including:
   the heating device according to [8]; and
   a carrying device configured to be able to place and remove the container with respect to the heating device.
   Such a configuration facilitates efficient heat transfer to and from the enclosed portion of the container.
[10] The processing device according to [9], including a cooling device with respect to which the carrying device is configured to be able to place and remove the container.
   Such a configuration facilitates cooling the sample after heating.
[11] The processing device according to [9] or [10], including a PCR device configured to be able to amplify nucleic acids.
   Such a configuration facilitates amplifying the nucleic acids extracted from the sample such as cells.
[12] The processing device according to any one of [9] to [11], including an analysis device configured to be able to identify the type of cells in the sample from which the nucleic acids have been extracted.
   Such a configuration facilitates identifying the type of cells in the sample.

According to the present disclosure, it is possible to provide the heat transfer device that facilitates efficient heat transfer to and from the enclosed portion of the container, the heating device, and the processing device.

### BRIEF DESCRIPTION OF THE DRAWINGS

In the accompanying drawings:
FIG. 1 is a diagram illustrating a part of a processing device with a heat transfer device according to a first embodiment, in a state before inserting enclosed portions of a container into receptacles;
FIG. 2 is a perspective view illustrating a state in which the enclosed portions of the container are inserted into the receptacles, from the state illustrated in FIG. 1;
FIG. 3 is a diagram viewed from an arrow A of FIG. 2;
FIG. 4 is a diagram viewed from an arrow B of FIG. 3;
FIG. 5 is a C-C cross-sectional view of FIG. 4;
FIG. 6 is an enlarged diagram of a section D of FIG. 5;
FIG. 7 is a conceptual diagram illustrating the processing device according to the first embodiment;
FIG. 8 is a graph illustrating evaluation results of a galling force;
FIG. 9 is a graph illustrating evaluation results of a temperature rise rate;
FIG. 10 is a partially enlarged side view illustrating a heat transfer device according to a second embodiment;
FIG. 11 is a cross-sectional view illustrating a heat transfer device according to a third embodiment;
FIG. 12 is a side view illustrating a heat transfer device according to a fourth embodiment; and
FIG. 13 is an E-E cross-sectional view of FIG. 12.

### DETAILED DESCRIPTION

Embodiments of the present disclosure will be exemplarily described below in detail with reference to the drawings.

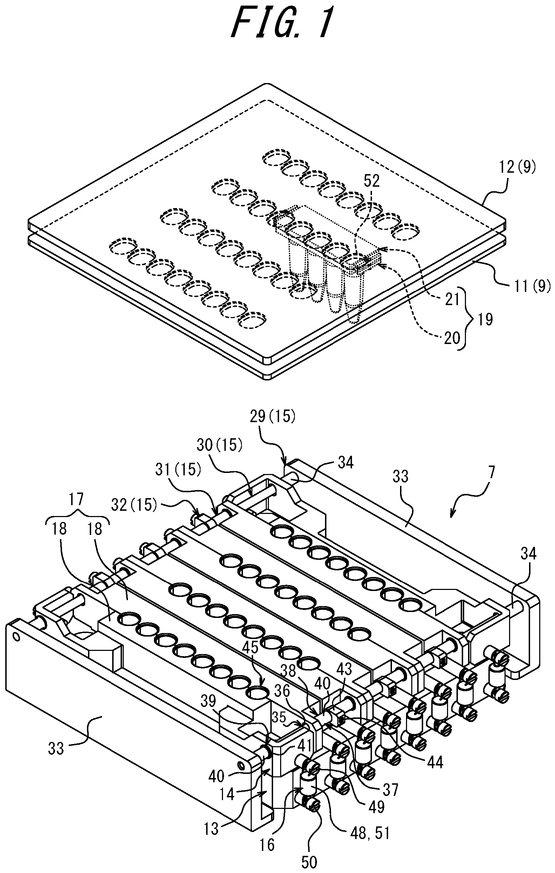

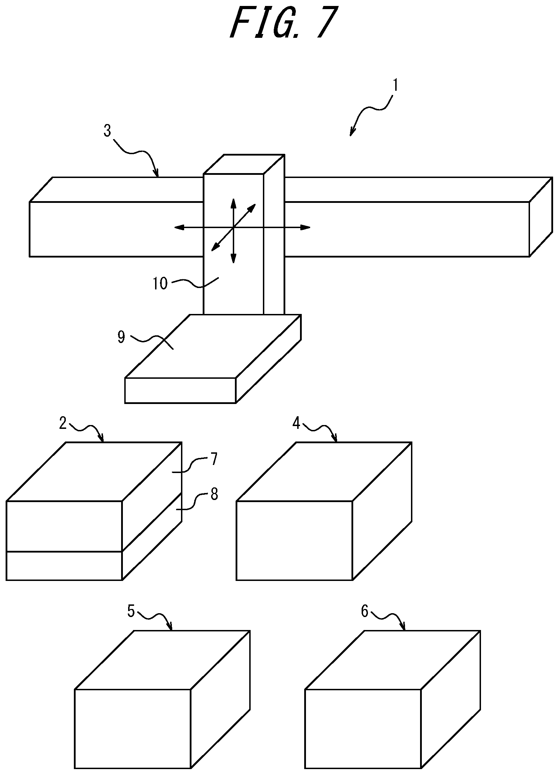

As illustrated in FIGS. 1 and 7, in a first embodiment, a processing device 1 includes a heating device 2, a carrying device 3, a cooling device 4, a PCR device 5, and an analysis device 6. The heating device 2 has a heat transfer device 7 and a heater 8. The carrying device 3 has a container holder 9 and a movement mechanism 10. The container holder 9 has a first plate 11 and a second plate 12. The heat transfer device 7 has a first block 13, a second block 14, a block support 15, and a first biasing unit 16. The second block 14 has a plurality (four) of block pairs 17. Each block pair 17 is constituted of a pair of blocks 18. The number of the block pairs 17 is not limited to four, but can be set as appropriate. In the present embodiment, the heating device 2, the carrying device 3, and the cooling device 4 constitute a nucleic acid extraction device.

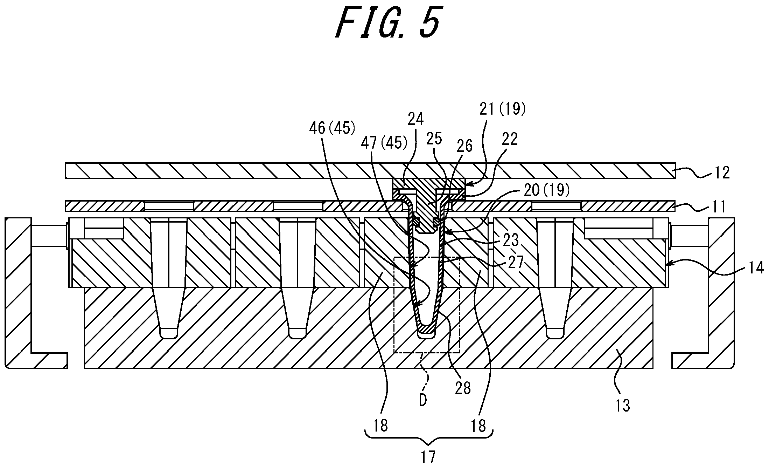

As illustrated in FIGS. 1 and 5, a container 19 has a container body 20 and an openable lid 21. The container body 20 has a mating portion 22 and a plurality (four) of barrels 23 each connected to the mating portion 22. The number of the barrels 23 is not limited to four, but can be set as appropriate. The openable lid 21 has a plate 24 that can be mated with the mating portion 22, and plugs 25 that are provided corresponding to the respective barrels 23. Each plug 25 has a seal 26. A portion of the barrel 23 that can enclose a sample constitutes an enclosed portion 27. The enclosed portion 27 has a tapered tip 28. The container 19 is made of resin, for example.

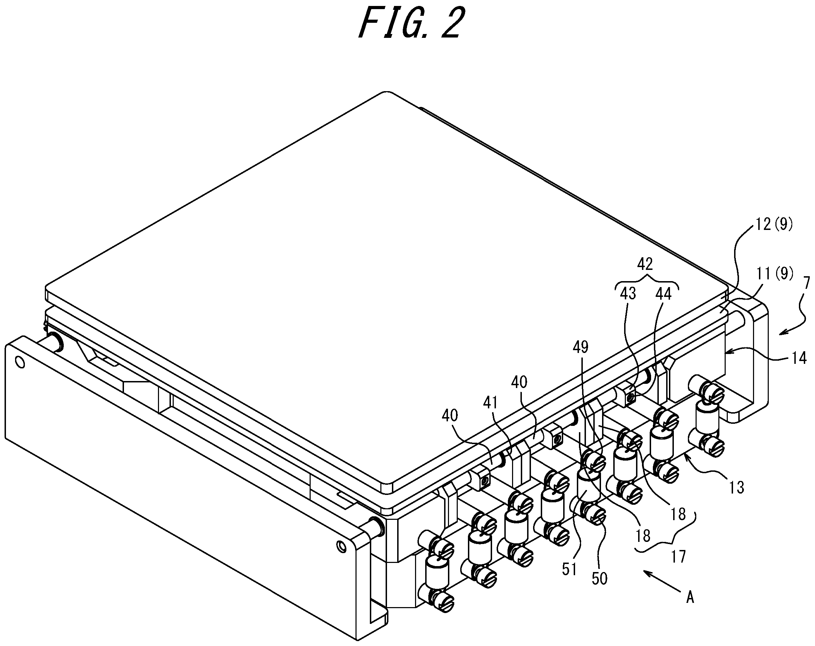

As illustrated in FIGS. 1 to 4, the block support 15 has a support unit 29, a shaft unit 30, a second biasing unit 31, and an adjuster unit 32. The support unit 29 is constituted of a pair of supports 33. The shaft unit 30 is constituted of a pair of shafts 34. The block pair 17 has a pair of shaft threading portions 35. The shaft threading portion 35 is constituted of a pair of through holes 36. The pair of through holes 36 is constituted of a through hole 36 that penetrates one block 18 of the block pair 17, and a through hole 36 that penetrates the other block 18 of the block pair 17. The second biasing unit 31 has spring biasing units 37 that are provided corresponding to the respective shaft threading portions 35. The spring biasing unit 37 has a compression spring pair 38 and a washer pair 39. The compression spring pair 38 is constituted of a pair of compression springs 40. The washer pair 39 is constituted of a pair of washers 41. The adjuster unit 32 has adjusters 42 each provided between the spring biasing units 37 adjacent to each other. The adjuster 42 has a slider 43 and a fixing screw 44. The support unit 29 is not limited to the configuration constituted of the pair of supports 33, but may be in a configuration constituted of one support 33.

As illustrated in FIGS. 1 and 5, the block pair 17 forms a part of each of a plurality (eight) of receptacles 45. The number of receptacles 45 corresponding to the single block pair 17 is not limited to eight, but can be set as appropriate. The receptacle 45 is configured to allow insertion and removal of the enclosed portion 27. The receptacle 45 is constituted of a plurality (three) of divided portions. More specifically, the receptacle 45 has a first portion 46 and a second portion 47. The first portion 46 is formed of the first block 13. The second portion 47 is formed of the block pair 17. More specifically, the second portion 47 is constituted of a pair of divided portions, one portion of which is formed of one block 18 and the other portion of which is formed of the other block 18. The first portion 46 is configured to receive the tip 28 of the enclosed portion 27. The second portion 47 is configured to receive a portion of the enclosed portion 27 other than the tip 28.

The shafts 34 extend in a first direction, which is a predetermined direction different from (perpendicular to) an insertion/removal direction of the enclosed portions 27 to/from the receptacles 45. More specifically, the shafts 34 are in the shape of rods whose longitudinal direction corresponds to the first direction. Accordingly, the block pairs 17 are guided, by the shaft unit 30, to be able to be apart from and close to each other in the first direction. Thus, the second portions 47 are enlargeable and contractible in the first direction. The first direction is not limited to the direction perpendicular to the insertion/removal direction, but can be any direction different from the insertion/removal direction.

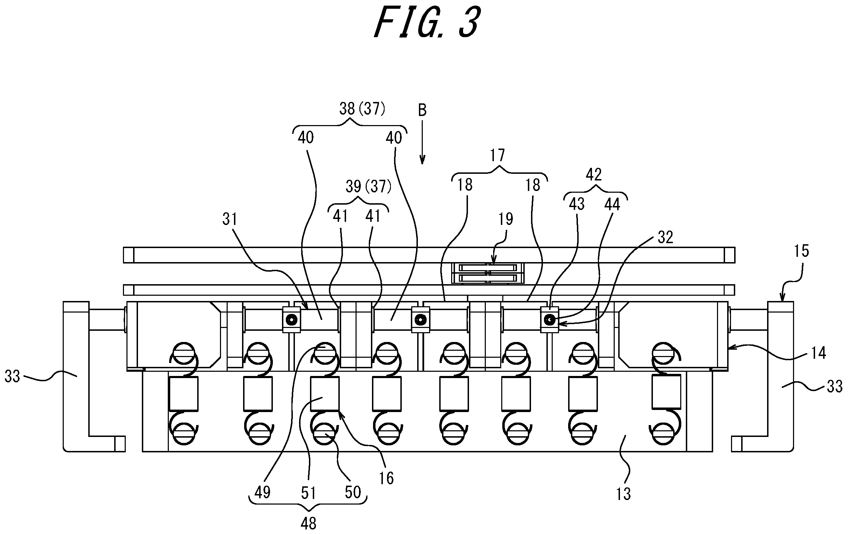

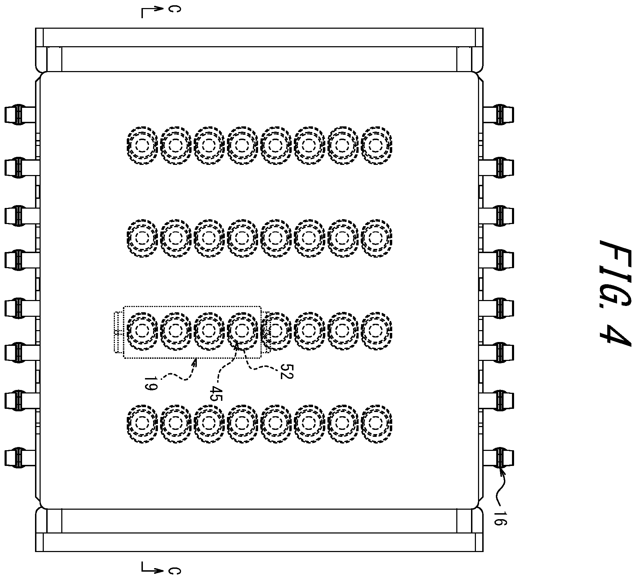

As illustrated in FIGS. 3 and 4, the first biasing unit 16 has spring biasing units 48 provided corresponding to both ends of the respective blocks 18 in a second direction. The second direction is a direction that is perpendicular to both the insertion/removal direction and the first direction. The spring biasing unit 48 has a tension spring 51 that is hooked between a spring hooking portion 49 of the block 18 and a spring hooking portion 50 of the first block 13. Each of the blocks 18 is in a long shape parallel to the second direction, but is not limited to this. Each of the blocks 18 may be configured to be in a long shape extending obliquely with respect to the second direction.

For convenience of explanation, the insertion/removal direction is also referred to as a vertical direction. A direction from the first portion 46 toward the second portion 47 along the insertion/removal direction is also referred to as upward, and the opposite direction is also referred to as downward. Upward usually coincides with vertical upward, but is not limited to this.

As illustrated in FIGS. 1 and 5, the first plate 11 has insertion holes 52 provided corresponding to the respective receptacles 45. The insertion holes 52 are configured to allow the barrels 23 of the container 19 to pass through, while not allowing the mating portion 22 and the openable lid 21 to pass through. By disposing the container 19 on the first plate 11 and pressing an upper surface of the openable lid 21 with a lower surface of the second plate 12, the container 19 is held by the container holder 9 with the enclosed portions 27 of the container 19 hermetically sealed. The second plate 12 is configured to be movable (form of movement, such as turn or parallel movement, is not limited) relative to the first plate 11 between an open position in which the container 19 can be disposed on the first plate 11, and a closed position in which the enclosed portions 27 of the container 19 can remain hermetically sealed. By moving the container holder 9 by the carrying device 3 to an installation position with respect to the heating device 2, the respective insertion holes 52 are arranged directly above the corresponding receptacles 45. As a result, the respective enclosed portions 27 are received by the corresponding receptacles 45. The carrying device 3 can insert and remove (insert and evacuate) the respective enclosed portions 27 into and from the corresponding receptacles 45 in the insertion/removal direction.

The first block 13 and the second block 14 (the plurality of block pairs 17) are each formed of a desired material, such as a metal, for example, with high thermal conductivity, and can transfer heat to and from the enclosed portions 27 (the portions of the barrels 23 that can contain the samples) received by the receptacles 45. The first block 13 is heated by the heater 8. The first block 13 can transfer heat of the first block 13 to the tips 28 of the enclosed portions 27 via the first portions 46 (surfaces of bottom portions of recesses) of the receptacles 45, to heat the tips 28 of the enclosed portions 27. The second block 14 can transfer heat, which is transferred from the first block 13 to the second block 14, to portions of the enclosed portions 27 other than the tips 28, via the second portions 47 (surfaces of upper portions of the recesses) of the receptacles 45, to heat the portions of the enclosed portions 27 other than the tips 28. The heater 8 can heat the first block 13 to a temperature appropriate for the application. A heat source of the heater 8 is not limited, and can be, for example, an electric heating wire, an electric heating element, a contact or noncontact heater, or the like. The heater 8 can be embedded in the first block 13, in contact with an outer surface of the first block 13, or separated from the first block 13. For example, an electric heating wire, an electric heating element, a heater, or the like can be incorporated in the first block 13.

The first block 13 has a planar upper surface perpendicular to the insertion/removal direction, and is in an approximately rectangular parallelepiped shape extending in the first and second directions. The second block 14 has a planar lower surface perpendicular to the insertion/removal direction, and is in an approximately rectangular parallelepiped shape extending in the first and second directions. The plurality (four) of block pairs 17, which constitute the second block 14, are provided side-by-side in the first direction. The pair of blocks 18, which constitutes the block pair 17, is provided side-by-side in the first direction. The plurality (eight) of receptacles 45, which correspond to the single block pair 17, are provided side-by-side in the second direction.

As illustrated in FIGS. 3 and 4, the spring hooking portions 49 of the blocks 18, which correspond to the respective spring biasing units 48 (tension springs 51), are constituted of columns that protrude in the second direction from ends of the blocks 18 in the second direction. The shape of the spring hooking portions 49 of the blocks 18 is not limited to the column, but can be set as appropriate. The spring hooking portions 50 of the first block 13, which correspond to the respective spring biasing units 48 (tension springs 51), are constituted of columns that protrude in the second direction from ends of the first block 13 in the second direction. The shape of the spring hooking portions 50 of the first block 13 is not limited to the column, but can be set as appropriate. The first biasing unit 16 biases the first block 13 and the second block 14 in a direction that brings the first block 13 and the second block 14 close to each other in the insertion/removal direction. As a result, the upper surface of the first block 13 and the lower surface of the second block 14 contact more tightly, which allows more efficient heat transfer. The configuration of the first biasing unit 16 is not limited to biasing the first block 13 and the second block 14 in the insertion/removal direction, as long as the configuration biases the first block 13 and the second block 14 in a direction that brings the first block 13 and the second block 14 close to each other. The direction that brings the first block 13 and the second block 14 close to each other is different from the first direction (in the present embodiment, the direction is perpendicular to the first direction, but is not limited to this).

As illustrated in FIGS. 1 and 3, the second block 14 is disposed between the pair of supports 33 in the first direction. The block pair 17 has one shaft threading portion 35 at one end in the second direction, and the other shaft threading portion 35 at the other end in the second direction. One shaft 34 passes through the respective shaft threading portions 35, the respective spring biasing units 37, and the respective adjusters 42 (sliders 43) provided at one end of the second block 14 in the second direction, and both ends of that shaft 34 are fixed to the respective supports 33. The other shaft 34 passes through the respective shaft threading portions 35, the respective spring biasing units 37, and the respective adjusters 42 (sliders 43) provided at the other end of the second block 14 in the second direction, and both ends of that shaft 34 are fixed to the respective supports 33.

The shaft threading portion 35 may be configured to be large enough with respect to the shaft 34. This allows each of the blocks 18, which constitute the second block 14, to move under a biasing force exerted by the spring biasing unit 37, without being prevented from moving by a frictional force occurring between the shaft 34 and the shaft threading portion 35.

As described above, each of the blocks 18 is biased in a direction toward the first block 13 by the spring biasing unit 48. However, when removing the container 19 from the heating device 2, a galling force may occur between the container 19 and the heating device 2, and the galling force may act on at least a part of the second block 14 to a direction away from the first block 13. Furthermore, due to the galling force acting on at least one block 18, when a force acting on this block 18 to the direction away from the first block 13 is larger than a force acting on this block 18 to the direction toward the first block 13 by the spring biasing unit 48, this block 18 may move away from the first block 13. When the force due to the galling force is even larger, for example, this block 18 may be on top of another block 18, thus failing to form the receptacles 45 of the pair of blocks 18.

Even when such a galling force causes at least a part of the second block 14 to move away from the first block 13, the shaft threading portion 35 provided in each block 18 does not move more than the amount of a gap between the shaft threading portion 35 and the shaft 34. Therefore, it is possible to reliably prevent a situation in which, for example, as described above, at least one block 18 moves on top of another block 18 and fails to form the receptacles 45 of the pair of blocks 18. In other words, the shaft threading portions 35 and the shafts 34 can be configured to also function as a regulator that regulates the amount of movement of the second block 14, with respect to the first block 13, in the insertion/removal direction.

Such a regulator may be provided separately from the shafts 34 and the shaft threading portions 35 (holes or long holes) as described above. In such a case, the disposition of the regulator is not particularly limited. The regulator may be disposed at both ends of each of the blocks 18, which constitute the second block 14, in the second direction, or at other portions.

The pair of washers 41 of the spring biasing unit 37 is disposed on both sides of the corresponding shaft threading portion 35 in the first direction. The pair of compression springs 40 of the spring biasing unit 37 is disposed on both sides of the corresponding shaft threading portion 35 and washer pair 39 in the first direction. An inner diameter of the washers 41 is sufficiently larger than an outer diameter of the shaft 34 to allow the washers 41 to move freely on the shaft 34. The inner diameter of the washers 41 is sufficiently smaller than an inner diameter of the compression springs 40, and an outer diameter of the washers 41 is sufficiently larger than an outer diameter of the compression springs 40, to prevent the compression springs 40 from entering the shaft threading portion 35. The sliders 43 are configured to be fixed on the shafts 34 by the fixing screws 44. The sliders 43 can also support ends of the compression springs 40 in the first direction. Since the sliders 43 can be fixed on the shafts 34 after the positions of the sliders 43 in the first direction are adjusted, it is possible to adjust a balance of biasing forces of the spring biasing units 37 adjacent to each other in the first direction.

As illustrated in FIGS. 3 and 5, the pair of blocks 18 is guided, by the shafts 34, to be able to be apart from and close to each other in the first direction, and is biased by the compression spring pairs 38 in a direction that brings the pair of blocks 18 close to each other in the first direction. Thus, due to manufacturing variations in the container 19, when a diameter dimension of the enclosed portions 27 received by the receptacles 45 is larger than a minimum dimension of the second portions 47 of the receptacles 45, which is a diameter dimension when the pair of blocks 18 contact each other in the first direction, the enclosed portions 27 press the second portions 47 of the receptacles 45 in the first direction against the biasing forces exerted by the second biasing unit 31, while the enclosed portions 27 are inserted into the receptacles 45, to enlarge the second portions 47 of the receptacles 45 in the first direction. Even when the diameter dimension of the enclosed portions 27 received by the receptacles 45 is larger than the minimum dimension of the second portions 47 of the receptacles 45 due to expansion of the enclosed portions 27 by heating, the enclosed portions 27 press the second portions 47 of the receptacles 45 in the first direction against the biasing forces exerted by the second biasing unit 31, with the expansion of the enclosed portions 27, to enlarge the second portions 47 of the receptacles 45 in the first direction.

Therefore, the diameter dimension of the receptacles 45 does not need to be set at a large size such that, even when the diameter dimension of the enclosed portions 27 is maximized due to manufacturing variations in the enclosed portions 27, expansion of the enclosed portions 27 themselves by heating, or expansion caused by increase in vapor pressure of liquid inside the enclosed portions 27, the enclosed portions 27 can be inserted into the receptacles 45 and are not difficult to remove from the receptacles 45 by being prevented from galling (i.e., adhering) to the second portions 47 of the receptacles 45. Therefore, a gap between the receptacle 45 and the enclosed portion 27 can be reduced even when the enclosed portions 27 are minimized due to manufacturing variations or in a state before heating, i.e., before expansion occurs. As a result, it is possible to facilitate efficient heat transfer to and from the enclosed portions 27.

A sliding surface between the first block 13 and the second block 14 preferably has a coating that can reduce sliding resistance. Such a coating may be provided on the upper surface of the first block 13 and/or the lower surface of the second block 14. The coating may be composed of, for example, an electroless Ni-P/PTFE composite plating with PTFE (polytetrafluoroethylene) particles dispersed in a nickel metal coating. In order to prevent galling, a sliding surface of the receptacle 45, among sliding surfaces between the enclosed portion 27 and the receptacle 45, preferably has a coating that can reduce sliding resistance. The coating may be composed of, for example, an electroless Ni-P/PTFE composite plating.

When a coating such as plating is applied, it is complicated to apply the coating only to a specific portion or not to apply the coating only to a specific portion, because masking or other processing is required at the time of coating. Since it is preferable that the block 18 has reduced sliding resistance on sliding surfaces with other members, the entire block 18 may be coated. When the entire block 18 is coated, it may not be possible to coat a portion with which the block 18 is held during a coating process. In such a case, it is preferable to provide a non-coated portion, other than the sliding surfaces between the block 18 and other members.

Considering the prevention of galling of the enclosed portions 27 and the efficiency of heat transfer between the second portion 47 of the receptacle 45 and the enclosed portion 27, a compression load of the compression springs 40 is preferably set at 0.5 to 1 N, for example. Considering the prevention of galling of the enclosed portions 27 and the efficiency of heat transfer between the first block 13 and the second block 14, a tensile load of the tension springs 51 is preferably set at 0.5 to 1 N, for example.

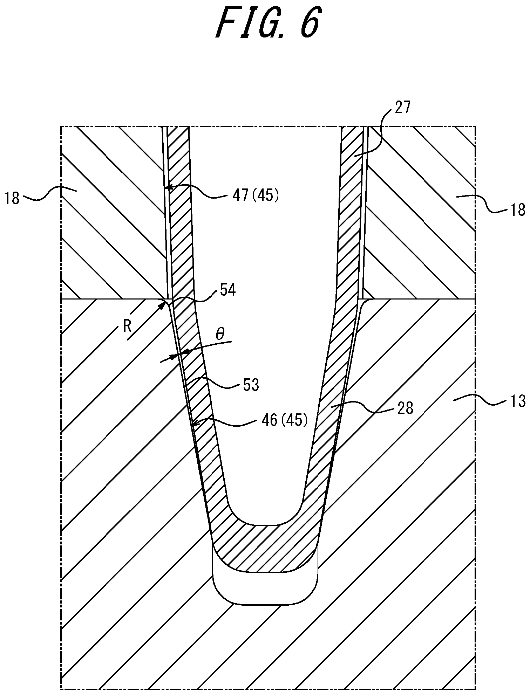

As illustrated in FIG. 6, the first portion 46 of the receptacle 45 preferably has a downward conical tapered surface 53 that faces an outer peripheral surface of the tip 28 of the downward conical enclosed portion 27. In this case, an inclination of the tapered surface 53 with respect to the insertion/removal direction is preferably larger than an inclination of the outer peripheral surface of the tip 28 of the enclosed portion 27 with respect to the insertion/removal direction by a predetermined angle θ. The predetermined angle θ is, for example, 1°. An upper edge of the tapered surface 53 preferably has a chamfer 54 along the entire circumference. The chamfer 54 is preferably formed of an R surface with a radius of curvature R of, for example, 0.4 mm or more. The above inclination of the tapered surface 53 and/or the above chamfer 54 can prevent the enclosed portion 27 from galling to the first portion 46 of the receptacle 45, due to manufacturing variations in the container 19, expansion of the enclosed portion 27 by heating, or the like.

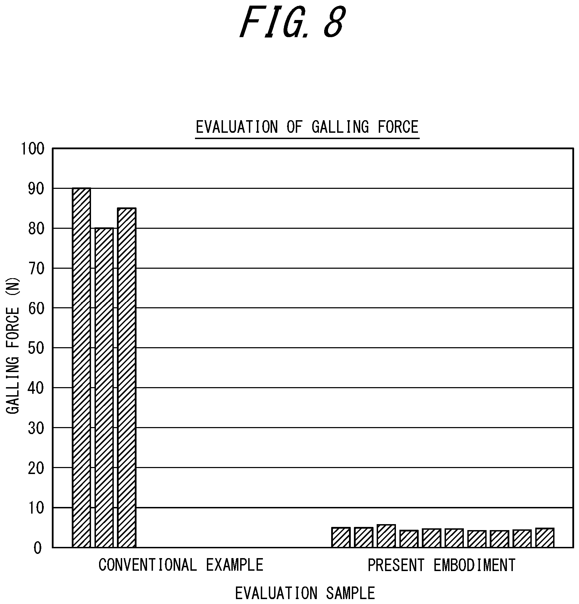

As illustrated in FIG. 8, the heating device 2 according to the present embodiment can significantly reduce a galling force. Galling is a phenomenon in which a part of the container 19 tightly adheres to the receptacles 45 of the heating device 2, and even though the container 19 is tried to be taken out in an opening direction of the receptacles 45, a resistance force occurs in taking out. Similarly, the galling force is a resistance force that occurs when the container 19 is taken out, even though the container 19 is tried to be taken out in the opening direction of the receptacles 45, due to galling. As test conditions, the temperature of the heat transfer device 7 was set at approximately 160°C, the container 19 was made of resin, and the amount of liquid in the enclosed portion 27 was 40 µL. In order to reduce variations in operations of evaluators, the insertion and removal of the container 19 was operated via a push-pull gauge attached to a tensile testing machine. This makes it possible to evaluate a resistance force when taking the container 19 out of the receptacles 45 with the push-pull gauge. As a result, as illustrated in FIG. 8, conventional receptacles 45 (recesses provided in an integrated block) had galling forces of 80 to 90 N, whereas the receptacles 45 of the present embodiment had reduced galling forces of approximately 5 N.

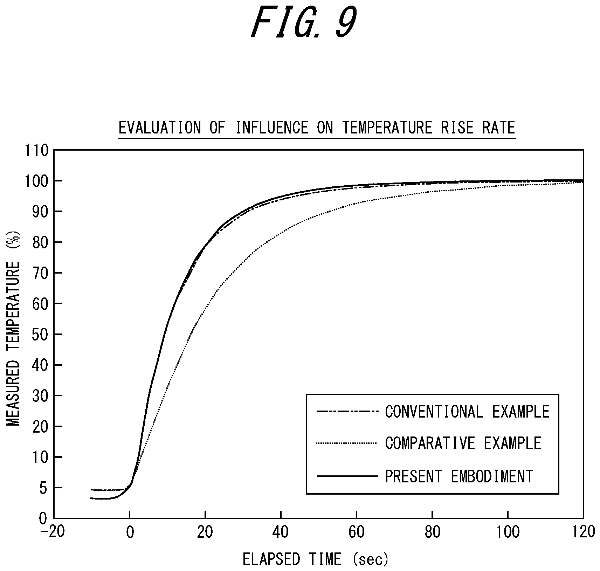

As illustrated in FIG. 9, the heating device 2 according to the present embodiment can achieve heat transfer equivalent to the conventional receptacles 45 described above. As test conditions, the temperature of the heat transfer device 7 was set at approximately 160°C, the container 19 was made of resin, and the amount of liquid in the enclosed portion 27 was 40 µL. In this test, by inserting a sheath thermocouple of Φ0.5 mm from the top of the container 19 through a small hole at the top of the container 19 and then sealing the hole with adhesive, the temperature of the liquid inside the container 19 was measured using the container 19 for testing. The position of a temperature detector at a tip of the sheath thermocouple was adjusted so as to be at the center of the liquid enclosed in the container 19 and fixed with the adhesive described above, to allow measurement of the temperature at the center of the liquid. The measured temperature is indicated such that 160°C, which is a final temperature reached, as 100%, and 25°C, which is a beginning temperature of the test, as 0%.

As a comparative example, in the conventional receptacles 45 (recesses provided in the integrated block), a case in which the gap between the receptacle 45 and the enclosed portion 27 is increased to 0.2 mm is illustrated. Here, in the case of not increasing the gap, the gap between the receptacle 45 (recess provided in the integrated block) and the enclosed portion 27 is 0.05 mm. The receptacles 45 according to the present embodiment have the same recess shape as when the gap between the receptacle 45 and the enclosed portion 27 is 0.05 mm. In the comparative example, although galling was reduced, a temperature rise was delayed by approximately ten or more seconds, compared to the case with the gap of 0.05 mm in the conventional receptacles 45 or the case of using the receptacles 45 according to the present embodiment.

As is seen from this result, in the conventional configuration of the receptacles 45, a trade-off relationship arises in which temperature raising performance deteriorates when the gap between the receptacle 45 and the enclosed portion 27 is widened to prevent galling. However, in the configuration of the present embodiment, regardless of the size of the gap between the receptacle 45 and the enclosed portion 27, galling can be prevented and the temperature raising performance can be secured, thus achieving effects beyond the trade-off in the conventional technology.

With the configuration of the present embodiment, as described above, the aforementioned effects can be obtained regardless of the size of the gap between the receptacle 45 and the enclosed portion 27. Therefore, even when the dimensions of the receptacles 45 vary, and/or the dimensions of the enclosed portions 27 vary, the aforementioned effects can be similarly obtained. In other words, the dimensions of the receptacles 45 fluctuate in practice because the receptacles 45 are manufactured by cutting, casting, die-casting, or other manufacturing methods. These variations in dimensions occur among different devices, and also among the respective receptacles 45 arranged in the heat transfer device 7, as illustrated in FIG. 1. Therefore, with the configuration of the receptacles 45 according to the conventional technology, variations in the galling force and temperature raising performance occur among devices, or even within a device, among the respective receptacles 45 arranged in the heat transfer device 7.

In the case of the variations among the devices, it is possible to reduce the variations by making adjustments at the time of factory shipment or startup for each device. However, the variations occurring among the respective receptacles 45 arranged in the heat transfer device 7 cannot be reduced. In addition, it is desirable to use a new container 19 for each sample, in order to prevent contamination by which a sample adhering to a container 19 is mixed into the next sample when the next sample is processed, and to make containers 19 of resin by injection molding or the like. Therefore, the dimensions of the containers 19 and the enclosed portions 27 thereof vary from container 19 to container 19, or even in the same container 19 with the enclosed portions 27 provided in multiple series, from enclosed portion 27 to enclosed portion 27. As a result, there is a risk of variations in the galling force and temperature raising performance for each of the containers 19 or for each of the enclosed portions 27 provided in the container 19 in multiple series.

For example, when nucleic acids are extracted from microorganisms (bacteria, archaebacteria, protists, Eumycetes, or the like) by the method disclosed in JP 5624487 B2, it is necessary to raise the temperature to a predetermined level to extract the nucleic acids from a cell suspension. However, when a temperature raising time is too long, the extracted nucleic acids are fragmented below a desired length. For example, when analysis is performed using the extracted nucleic acids, fragmentation below the desired length may interfere with the analysis, and in the worst case, false positives or false negatives may occur, which results in erroneous determination. According to the configuration of the present embodiment, which makes it possible to raise the temperature to the predetermined level in a predetermined time by preventing variations in the galling force and temperature raising performance even when variations occur in the dimensions of the receptacles 45, the container 19, and the enclosed portions 27, such erroneous determination can be prevented.

Also, for example, JP 2011-19537 A discloses the configuration that can be heated in PCR amplification, in which reactions are performed at temperatures below boiling points. Therefore, when the configuration is used as is in a process of extracting nucleic acids from bacteria or Eumycetes at a high temperature above the boiling point in a container with the bacteria or Eumycetes and at high pressure due to saturated vapor pressure at such a high temperature, especially in a case in which the container is made of resin, a container wall may gall to a heating block due to expansion of the resin container caused by the saturated vapor pressure, which makes it impossible to lift the resin container from the heating block after a certain period of heating process. Forcibly lifting up the resin container may cause a break of the resin container itself due to friction between the resin container and the heating block. When an actuator or the like is used for lifting up, the actuator or the like may be, in the worst case, damaged or abnormally heated due to an excessive load on the actuator or the like, and surrounding mechanical parts may also be involved, which causes loud noise, impact, or even damage. To prevent galling to the heating block, it is conceivable to make the shape of the heating block more resistant to galling of the container, with an increased gap between the container and the heating block. In this case, however, contact between the resin container and the heating block is reduced, resulting in a delay of a rise in the internal temperature of a sample in the container and possibly not extracting an intended amount of nucleic acids.

As illustrated in FIG. 7, the carrying device 3 can move the container holder 9 in the insertion/removal direction, the first direction, and the second direction, for example. The carrying device 3 can move the container holder 9, under the control of a control device such as a computer or a programmable logic controller (PCL), to the heating device 2, the cooling device 4, the PCR device 5, and the analysis device 6 in this order. In other words, the carrying device 3 is configured to be able to place and remove the container 19 with respect to each of the heating device 2, the cooling device 4, the PCR device 5, and the analysis device 6. The carrying device 3 may be configured to allow parallel movement of the container holder 9 in each of the insertion/removal direction, the first direction, and the second direction, or may be configured to allow movement of the container holder 9 by movement accompanied by rotation.

The heating device 2 is configured such that the heater 8 heats the heat transfer device 7 under computer control, to thereby heat the enclosed portions 27 received by the receptacles 45 by transfer of heat from the receptacles 45. The cooling device 4 is configured to be able to cool the enclosed portions 27. The PCR device 5 is configured to be able to amplify nucleic acids enclosed in the enclosed portions 27. The analysis device 6 is configured to be able to identify the type of cells in the samples from which the nucleic acids have been extracted, by analyzing the nucleic acids enclosed in the enclosed portions 27 using fluorescence, for example.

According to the processing device 1 as described above, a cell suspension is used as the samples, and the heating device 2 heats the enclosed portions 27 to a temperature (e.g., 100 to 160°C) at which the samples are above the boiling point, thereby at least partially destroying the cells and extracting the nucleic acids from the cell suspension in the enclosed portions 27. Then, after the enclosed portions 27 are cooled down to an appropriate temperature by the cooling device 4, the enclosed portions 27 are placed in the PCR device 5 to amplify the nucleic acids, and the nucleic acids can be analyzed by the analysis device 6 to identify the type of cells such as bacteria or Eumycetes in the samples.

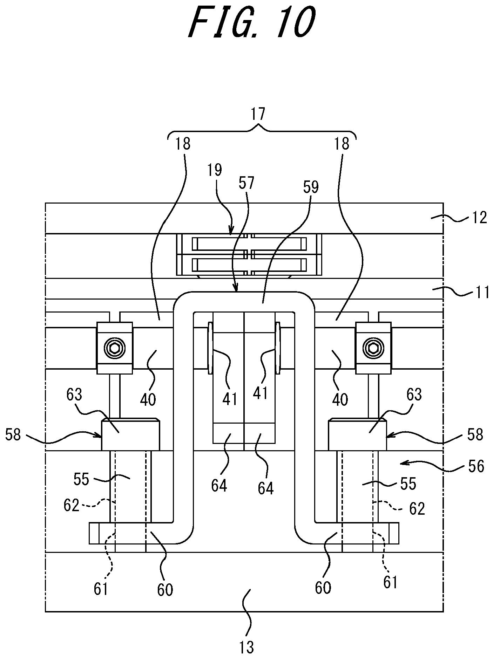

In the first embodiment, the first biasing unit 16 uses the tension springs 51, but as in a second embodiment illustrated in FIG. 10, the first biasing unit 16 may be configured to use compression springs 55, instead of the tension springs 51. In the second embodiment, the first biasing unit 16 has spring biasing units 56 that are provided corresponding to both ends of each of the block pairs 17 in the second direction, instead of the spring biasing units 48.

The spring biasing unit 56 has a holding member 57, a pair of mounting screws 58, and a pair of compression springs 55. The holding member 57 is in such a shape that a middle portion 59 in the first direction is displaced upward from both ends 60. Each of the ends 60 has a screw threading portion 61 through which the mounting screw 58 is threaded in the insertion/removal direction. The mounting screw 58 has a shaft 62 and a head 63 with a larger diameter than the shaft 62. With a tip of the shaft 62 facing downward and the shaft 62 passing through the corresponding compression spring 55 and the screw threading portion 61, the tip of the shaft 62 is screwed into and secured to the first block 13. The compression spring 55 applies a biasing force between a lower surface of the head 63 of the mounting screw 58 and an upper surface of the screw threading portion 61 of the holding member 57, in a direction that brings the lower surface of the head 63 and the upper surface of the screw threading portion 61 apart from each other.

Each of the ends of the pair of blocks 18 in the second direction has a protrusion 64 that contacts a lower surface of the middle portion 59 of the holding member 57 slidably in the first direction. Lower surfaces of the ends 60 of the holding member 57 are held with predetermined gaps against the upper surface of the first block 13. Thus, even in the second embodiment, the first biasing unit 16 biases the first block 13 and the second block 14 in the direction that brings the first block 13 and the second block 14 close to each other in the insertion/removal direction. As a result, heat can be efficiently transferred between the first block 13 and the second block 14. In the present embodiment, for example, the same components as the compression springs 40 of the second biasing unit 31 may be used in the first biasing unit 16 in order to reduce a burden and cost in component management.

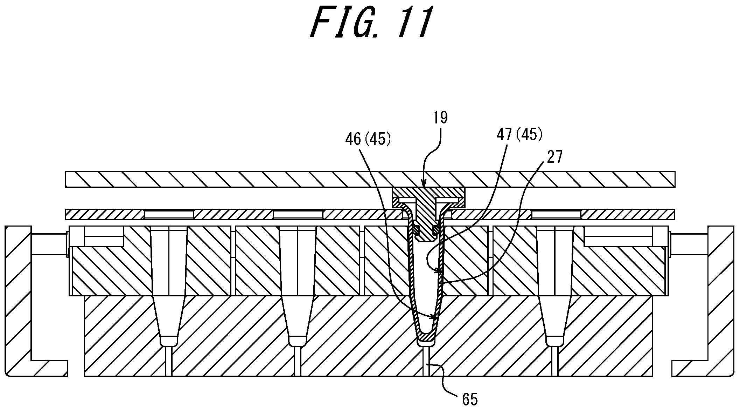

In the first embodiment, the first portion 46 of the receptacle 45 has a closed bottom, as illustrated in FIG. 6, but may be configured with a passage 65 of 1 mm in diameter, for example, at the bottom of the first portion 46 of receptacle 45, as in a third embodiment illustrated in FIG. 11. According to such a configuration, for example, when the enclosed portion 27 does not reach the lowest portion of the receptacle 45, vacuuming can be performed through the passage 65 to make the enclosed portion 27 reach the lowest portion. Also, for example, when the container 19 is ejected from the receptacles 45, pressurized gas can be sent through the passages 65 to assist the ejection. Also, for example, a temperature sensor, such as a thermocouple, can be provided in the passage 65 for temperature measurement. For example, a positioning pin or the like can be provided in the passage 65 and used for positioning to another component such as the heater 8.

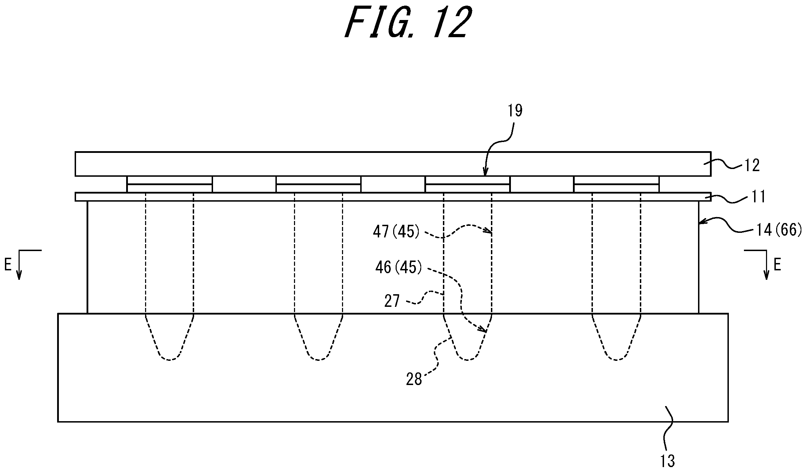

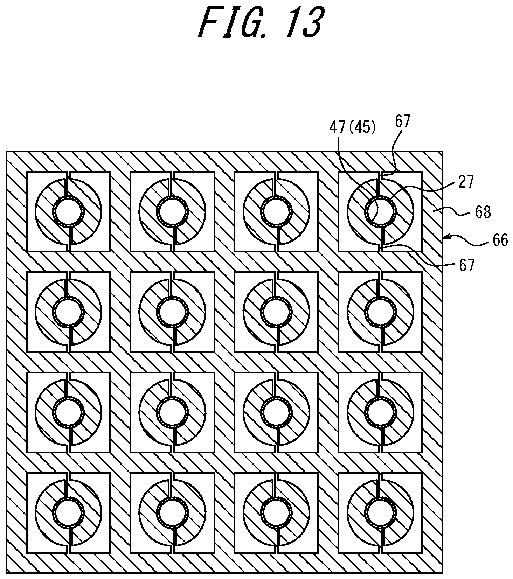

In the first embodiment, the second portions 47 of the receptacles 45 are formed of the block pairs 17 that are guided, by the shafts 34, to be able to be apart from and close to each other in the first direction. However, for example, as in a fourth embodiment illustrated in FIGS. 12 to 13, the second portions 47 of the receptacles 45 may be formed by an integral block 66 such that the second portions 47 of the receptacles 45 are configured to be enlargeable and contractible in a third direction, which is a predetermined direction different from (perpendicular to) the insertion/removal direction of the enclosed portions 27, and are biased in a contracting direction at least when enlarged.

In the fourth embodiment, the receptacle 45 has a first portion 46 configured to receive the tapered tip 28 of the enclosed portion 27, and a second portion 47 configured to receive a portion of the enclosed portion 27 other than the tip 28. The second portion 47 is constituted of a pair of portions divided in the third direction. The pair of portions is each in a semi-cylindrical shape extending in the vertical direction, and is, as a whole, in a cylindrical shape extending in the vertical direction. Although FIG. 12 illustrates an example in which a cylindrical wall surface is vertical, the cylindrical wall surface may have a tapered angle, instead of being vertical, as illustrated in FIGS. 5 and 11 above. The provision of the tapered angle allows further reduction of the galling force.

A circumferential end of each of the pair of portions is connected to a block body 68 via an elastic portion 67. A gap is provided between the block body 68 and each of the pair of portions, to the extent that, due to elastic deformation of the elastic portions 67, the pair of portions can be separated from each other in the third direction. This configuration also allows the receptacle 45 to be configured to be enlargeable and contractible, and to be biased in a contracting direction at last when enlarged. Here, the receptacle 45 can be configured such that the receptacle 45 is enlarged when the enclosed portion 27 is inserted into the receptacle 45, by making the size of the receptacle 45 contracted, without insertion of the enclosed portion 27 into the receptacle 45, smaller than the enclosed portion 27. Therefore, when the enclosed portion 27 is inserted into the receptacle 45, the receptacle 45 is enlarged and biased in the contracting direction, which enables the enclosed portion 27 to be biased in a direction of pushing the enclosed portion 27. Accordingly, it is possible to facilitate efficient heat transfer by reducing the gap between the receptacle 45 and the enclosed portion 27, and prevent galling of the enclosed portion 27.

In the present embodiment, the elastic portion 67 connected to one portion of the second portion 47 and the elastic portion 67 connected to the other portion of the second portion 47 are provided at positions that are opposite to each other in a circumferential direction, but not limited to this, may be provided at positions adjacent to each other in the circumferential direction. The elastic portions 67 may be separately provided for both the block body 68 and the second portion 47, and attached thereto. The number of receptacles 45 provided in the block 66 is not limited to sixteen as illustrated in the figure, but can be set as appropriate.

The elastic portions 67 may be configured to be integrally provided for one of the block body 68 or the second portion 47 and attached thereto, and separately provided for the other and attached thereto. The elastic portion 67 may also be configured to be provided for at least a part of the divided second portion 47. For example, in a configuration in which the second portion 47 is divided into two, one of the divided second portion 47 may be configured to be fixed to the block body 68, and the other of the divided second portion 47 may be configured to be connected to the block body 68 via the elastic portion 67. In such a configuration, the second portion 47 connected to the block body 68 via the elastic portion 67 pushes the enclosed portion 27, and the position of the second portion 47 connected to the block body 68 via the elastic portion 67 moves along the enclosed portion 27, due to shape variations of the second portion 47 and the enclosed portion 27. In contrast, the second portion 47 fixed to the block body 68 does not move, and receives a force with which the second portion 47 connected to the block body 68 via the elastic portion 67 pushes the enclosed portion 27. Therefore, the enclosed portion 27 is pushed by the second portion 47 connected to the block body 68 via the elastic portion 67 and the second portion 47 fixed to the block body 68, which facilitates efficient heat transfer by reducing the gap between the receptacle 45 and the enclosed portion 27, and prevents galling of the enclosed portion 27.

Since the position of the enclosed portion 27 is determined by the second portion 47 fixed to the block body 68, positional fluctuations can be reduced, as compared to the case in which all the second portions 47 are connected to the block body 68 via the elastic portions 67, as described above. The position of the container 19 is important when, for example, the container 19 is moved using the carrying device 3 controlled by the control device to place and remove the container 19 with respect to the heating device 2 and the cooling device 4, as described above. Therefore, it is advantageous, when the container 19 is carried, to determine the position of the enclosed portion 27, which is a part of the container 19, with respect to the heating device 2 and the cooling device 4.

The aforementioned first to fourth embodiments illustrate the heat transfer device 7 that is divided into the first block 13 at the bottom and the second block 14 at the top. The second block 14 has the receptacles 45 (second portions 47) each divided into two. The first block 13 has the integrated receptacles 45 (first portions 46). Each receptacle 45 is divided into three.

However, the heat transfer device 7 of the aforementioned embodiments is not limited to such a configuration in which each receptacle 45 is divided into three, but may also be configured in which each receptacle 45 is divided into two, which is not illustrated in a drawing though. That is, instead of using the receptacles 45 (first portions 46) in the first block 13, the receptacles 45 (second portions 47) in the second block 14, which are each divided into two, may be configured to be able to receive not only the enclosed portions 27 of the containers 19 but also the tips 28. In this case, the first block 13 may not be used, or a first block 13 without receptacles 45 (first portions 46) may be used.

In the case of such a fifth embodiment, as with above, the receptacles 45 can be configured to be enlargeable and contractible, and to be biased in a contracting direction at least when enlarged. Therefore, it is possible to facilitate efficient heat transfer by reducing gaps between the receptacle 45 and the enclosed portion 27, and between the receptacle 45 and the tip 28, and prevents galling of the enclosed portion 27.

In the case of the fifth embodiment, when the container 19 is inserted deeply into the receptacles 45, the receptacles 45 can continue to be enlarged according to the amount of insertion of the container 19, and it is necessary to regulate the amount of insertion of the container 19 to regulate the enlargement of the receptacles 45. In contrast, in the case of the aforementioned first to fourth embodiments, the first portions 46 provided in the first block 13 can be used as a regulator in an insertion direction of the container 19.

As described above, in order to facilitate efficient heat transfer by reducing the gaps between the receptacle 45 and the enclosed portion 27, and between the receptacle 45 and the tip 28, it is desirable to press the enclosed portion 27 and the tip 28 against the receptacle 45 as strongly as possible. However, in the aforementioned fifth embodiment, when the container 19 is inserted deeply to press the container 19 strongly against the receptacles 45, the receptacles 45 continue to be enlarged, so the container 19 cannot be pressed strongly against the receptacles 45 by the carrying device 3 or the like. In contrast, in the cases of the aforementioned first to fourth embodiments, the first portions 46 provided in the first block 13 serves as a regulator in the insertion direction of the container 19. Thus, at least portions of the container 19 in contact with the first portions 46 provided in the first block 13 can be strongly pressed against the receptacles 45 by the carrying device 3 or the like.

Here, the samples to be heated and cooled in the container 19 are collected at tip portions of the container 19 by gravity. Therefore, it is advantageous for efficient heating and cooling to strongly press, against the receptacles 45, the portions of the container 19 in contact with the first portions 46 provided in the first block 13, which are located at the tip portions of the container 19.

Furthermore, as illustrated in FIG. 6, the portion of the container 19 in contact with the first portion 46 provided in the first block 13 can have a sufficiently large taper angle with respect to the insertion/removal direction, as compared to other portions of the container 19. Therefore, even when the portion in contact with the first portion 46 provided in the first block 13 is strongly pressed against the receptacle 45, the occurrence of galling can be reduced, and the occurrence of problems with insertion and removal of the container 19 can be prevented.

The present disclosure is not limited to the aforementioned embodiments and can be modified in various ways without departing from the gist thereof.

Thus, the heat transfer device 7 according to the embodiments described above can be modified in various ways, as long as the heat transfer device 7 is a heat transfer device 7 that has a receptacle 45 into and from which an enclosed portion 27 of a container 19, which can enclose a sample, is configured to be insertable and removable, and that can transfer heat to and from the received enclosed portion 27, and is a heat transfer device 7 in which the receptacle 45 is configured to be enlargeable and contractible and to be biased in a contracting direction at least when enlarged. For example, the spring biasing unit 48 and the spring biasing unit 37 may be configured as an integrated biasing unit that applies a biasing force equivalent to a resultant force that the spring biasing unit 48 and the spring biasing unit 37 exert on each block 18, instead of being separate. A spring constituting the integrated biasing unit is not particularly limited, but may be a compression spring, a tension spring, or a torsion spring. The heat transfer device 7 is not limited to being used in the heating device 2, but may also be used in the cooling device 4.

The heating device 2 according to the embodiments described above can be modified in various ways, as long as the heating device 2 is a heating device 2 that has the heat transfer device 7, and a heat source that can heat the heat transfer device 7.

The processing device 1 according to the embodiments described above can be modified in various ways, as long as the processing device 1 is a processing device 1 that has the heating device 2, and a carrying device 3 that can place and remove the container 19 with respect to the heating device 2.

The heat transfer device 7 according to the embodiments described above is preferably a heat transfer device 7 in which the receptacle 45 is constituted of a plurality of divided portions.

The heat transfer device 7 according to the embodiments described above is preferably a heat transfer device 7 in which the receptacle 45 is configured to be enlargeable and contractible in a predetermined direction different from an insertion/removal direction of the enclosed portion 27.

The heat transfer device 7 according to the embodiments described above is preferably a heat transfer device 7 in which the receptacle 45 has a first portion 46 configured to be able to receive a tapered tip 28 of the enclosed portion 27 and a second portion 47 configured to be able to receive a portion of the enclosed portion 27 other than the tip 28, and in which the second portion 47 is configured to be enlargeable and contractible in a predetermined direction different from an insertion/removal direction of the enclosed portion 27 and to be biased in the contracting direction at least when enlarged.

The heat transfer device 7 according to the embodiments described above is preferably a heat transfer device 7 in which the first portion 46 and the second portion 47 are biased in a direction that brings the first portion 46 and the second portion 47 close to each other.

The heat transfer device 7 according to the embodiments described above is preferably a heat transfer device 7 in which the second portion 47 is formed of a block pair 17 that is guided, by a shaft 34, to be able to be apart from and close to each other in the predetermined direction.

The heat transfer device 7 according to the embodiments described above is preferably a heat transfer device 7 in which the block pair 17 is biased, by a compression spring pair 38 passed through the shaft 34, in a direction that brings the block pair 17 close to each other in the predetermined direction, at least when extended.

The processing device 1 according to the embodiments described above is preferably a processing device 1 that has a cooling device 4 with respect to which the carrying device 3 can place and remove the container 19.

The processing device 1 according to the embodiments described above is preferably a processing device 1 having a PCR device 5 that can amplify nucleic acids.

The processing device 1 according to the embodiments described above is preferably a processing device 1 having an analysis device 6 that can identify, by analyzing nucleic acids, the type of cells in the sample from which the nucleic acids have been extracted.

## Claims

1. A heat transfer device comprising a receptacle into and from which an enclosed portion of a container that can enclose a sample is configured to be insertable and removable, the receptacle configured to be able to transfer heat to and from the received enclosed portion,
wherein the receptacle is configured to be enlargeable and contractible, and to be biased in a contracting direction at least when enlarged.

2. The heat transfer device according to claim 1, wherein the receptacle is constituted of a plurality of divided portions.

3. The heat transfer device according to claim 1, wherein the receptacle is configured to be enlargeable and contractible in a predetermined direction different from an insertion/removal direction of the enclosed portion.

4. The heat transfer device according to claim 1, wherein
the receptacle has a first portion configured to be able to receive a tapered tip of the enclosed portion and a second portion configured to be able to receive a portion of the enclosed portion other than the tip, and
the second portion is configured to be enlargeable and contractible in a predetermined direction different from an insertion/removal direction of the enclosed portion, and to be biased in the contracting direction at least when enlarged.

5. The heat transfer device according to claim 4, wherein the first portion and the second portion are biased in a direction that brings the first portion and the second portion close to each other.

6. The heat transfer device according to claim 4, wherein the second portion is formed of a block pair that is guided, by a shaft, to be able to be apart from and close to each other in the predetermined direction.

7. The heat transfer device according to claim 6, wherein the block pair is biased, by a compression spring pair passed through the shaft, in a direction that brings the block pair close to each other in the predetermined direction, at least when enlarged.

8. A heating device comprising:
the heat transfer device according to any one of claims 1 to 7; and
a heater configured to be able to heat the heat transfer device.

9. A processing device comprising:
the heating device according to claim 8; and
a carrying device configured to be able to place and remove the container with respect to the heating device.
